# FASCICULE DE BREVET EUROPEEN

(11) **EP 3 964 898 B1**
(45) Date de publication et mention de la délivrance du brevet: **30.10.2024**
(21) Numéro de dépôt: 20194645.6
(22) Date de dépôt: 04.09.2020
(51) Int. Cl.: G04R 60/10

(54) **DISPOSITIF D'ANTENNE POUR PIECE D'HORLOGERIE**
ANTENNENVORRICHTUNG FÜR UHR
ANTENNA DEVICE FOR TIMEPIECE

(43) Date de publication de la demande: 09.03.2022
(73) Titulaire: The Swatch Group Research and Development Ltd, 2074 Marin (CH)
(72) Inventeur: SCORDILIS, Thierry, 2036 Cormondrèche (CH); RANDJELOVIC, Zoran, 2035 Corcelles (CH); GORISSE, Jean, 2000 Neuchâtel (CH)
(74) Mandataire: ICB SA

(56) Documents cités:
- EP-A1- 1 315 052
- WO-A1-2020/129352
- US-A1- 2020 243 943

## Description

### Domaine technique de l'invention

L'invention concerne un dispositif d'antenne employé dans un système de communication pour pièce d'horlogerie.

### Arrière-plan technologique de l'invention

Depuis quelques années déjà, les montres intègrent des moyens de communication afin de pouvoir se connecter sur différents réseaux de communication, tels que Bluetooth pour se relier à un terminal mobile, et de géolocalisation, pour se connecter aux différents systèmes de localisation par satellite tels que GPS, Glonass ou Galileo. Pour cela, une montre intègre une ou plusieurs antennes.

Il est connu que la taille optimale d'une antenne dépend directement de la longueur d'onde du signal émis/reçu. Une antenne de longueur optimale permet d'envoyer/recevoir un signal en entier et à pleine puissance.

Dans une montre, l'espace disponible étant limité, une antenne doit disposer d'un design adapté pour s'intégrer dans la carrure de la montre.

WO 2020/129352 A1 divulgue un substrat circulaire destiné à être employé dans un système de communication d'une pièce d'horlogerie, ledit substrat comprenant un circuit d'antenne de type NFC ou GPS ou Bluetooth.

Et si la montre intègre un moyen de communication radio qui fonctionne sur des fréquences radio (telles que le 2.4 GHz ou 1.5 GHz), la taille du produit devient critique par rapport à la longueur d'onde (120 mm et 200 mm).

Par ailleurs, d'autres contraintes doivent également être prises en compte :
- La montre comporte beaucoup de parties métalliques, notamment sa carrure, et une antenne doit en être isolée.
- La montre peut intégrer dans un même boîtier plusieurs dispositifs de communication, comme précisé ci-dessus. La montre ne peut pas disposer d'un volume allant au-delà d'une certaine taille (diamètre de 50mm maximum en règle générale).

Le but de l'invention est de disposer d'un dispositif d'antenne destiné à être employé dans un système de communication pour une pièce d'horlogerie, telle qu'une montre, qui intègre au moins deux circuits d'antenne ayant chacun une longueur optimale pour envoyer/recevoir un signal en entier et à pleine puissance et venir s'intégrer dans la carrure d'une montre, dont le volume d'accueil est limité.

### Résumé de l'invention

Ce but est atteint par la réalisation d'une structure rayonnante unique de type multibandes miniature qui utilise les propriétés des matériaux à proximité (carrure métal, verre saphir). Cette intégration est rendue possible par une séparation entre l'intégration physique (la construction) et la forme d'antenne, grâce à une technique d'impression (pcb flex par exemple). Cette structure multibande étant connectée à l'électronique par le biais d'une circuiterie de type filtres réjecteurs. Conformément à la présente invention, il est proposé un dispositif d'antenne correspondant à la revendication 1. Des modes de réalisation préférés sont définis dans les revendications dépendantes 2 à 11.

### Brève description des figures

D'autres caractéristiques et avantages de la présente invention ressortiront plus clairement de la description détaillée qui suit, faite en liaison avec les figures annexées listées ci-dessous :
- La figure 1 représente le dispositif d'antenne conforme à l'invention ;
- La figure 2 représente, vue en coupe partielle, une pièce d'horlogerie intégrant le dispositif d'antenne conforme à l'invention ;
- La figure 3 représente un diagramme illustrant le gain vu par chaque bande de fréquence employée dans le système de communication de l'invention, et
- La figure 4 représente un diagramme illustrant le principe d'isolation des bandes de fréquence permises par le dispositif d'antenne de l'invention.

### Description détaillée d'un mode de réalisation de l'invention

Dans la suite de la description, les termes "haut", "bas", "supérieur", "inférieur", "au-dessus" "au-dessous" sont à considérer en tenant compte d'un plan (P) médian horizontal parallèle au plan d'appui horizontal du boîtier de la pièce d'horlogerie sur une surface.

Les termes "extérieur", "externe", "intérieur" et "interne" sont à comprendre en tenant compte d'un axe (X) médian orienté perpendiculairement audit plan médian.

La présente invention concerne un dispositif d'antenne destiné à être employé dans un système de communication à intégrer dans le boîtier d'une pièce d'horlogerie, notamment une montre bracelet ou encore une montre connectée ou une montre bracelet connectée.

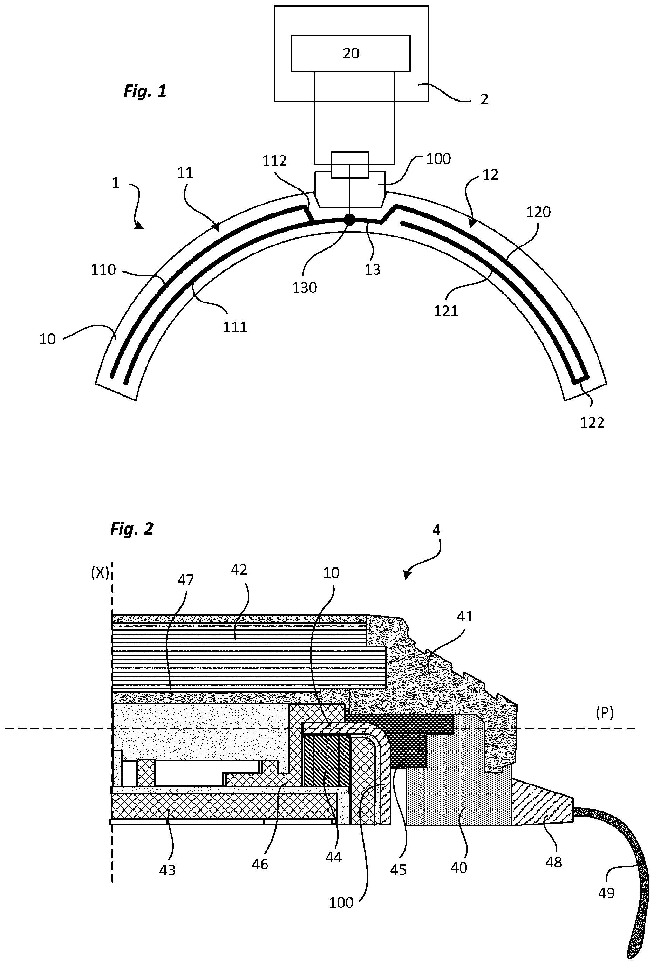

En référence à la figure 2, le boîtier d'une pièce d'horlogerie 4 comporte un volume d'accueil défini par une carrure 40, généralement réalisée en matériau métallique, formant sa paroi latérale autour dudit axe médian, réalisée en une seule partie ou en deux parties avec une lunette 41 supérieure, par exemple réalisée en céramique ou en titane. Le volume d'accueil de la pièce d'horlogerie 4 est fermé par le haut au moyen d'une vitre 42, par exemple en verre saphir, supportée par la carrure 40 et fixée de manière étanche à celle-ci par un procédé adapté. La pièce d'horlogerie comporte également une paroi de fond (non visible), par exemple métallique, située à l'opposé de sa vitre 42 par rapport au plan médian, avantageusement isolée de la carrure par un joint, venant fermer le volume d'accueil par le bas.

Selon un aspect particulier de l'invention, la pièce d'horlogerie 4 comporte un système de communication qui comporte principalement :
- Un dispositif d'antenne de communication 1 et,
- Un circuit 20 de filtrage de type duplexeur/réjecteur, connu en soi de l'homme du métier.

Le dispositif d'antenne 1 comporte un substrat 10, avantageusement réalisé sous la forme d'un circuit imprimé flexible (appelé couramment "flex").

En référence à la figure 1, le dispositif d'antenne 1 présente la particularité de comporter deux circuits d'antenne distincts, pour permettre à la pièce d'horlogerie de se connecter sur deux réseaux distincts, plus précisément un réseau de communication de type Bluetooth et un réseau de localisation par satellite GNSS (Geolocation and Navigation Satellite System), tel que par exemple le GPS (Global Positioning System), Glonass ou Galileo.

Les deux circuits d'antenne sont réalisés sur le même substrat par des procédés standards employés dans le domaine des circuits imprimés.

Selon un aspect particulier de l'invention :
- Le premier circuit d'antenne 11 présente un premier brin 110 et un deuxième brin 111 qui comportent chacun une extrémité proximale et une extrémité distale, et qui s'étendent en parallèle entre leurs extrémités proximales et distales, les premier et deuxième brins étant connectés 112 par leurs extrémités proximales et séparés au niveau de leurs extrémités distales ;
- Le deuxième circuit d'antenne 12 présente un troisième brin 120 et un quatrième brin 121 qui comportent chacun une extrémité proximale et une extrémité distale, et qui s'étendent en parallèle entre leurs extrémités proximales et distales, les troisième et quatrième brins étant connectés 122 par leurs extrémités distales et séparés au niveau de leurs extrémités proximales ;

Une liaison électrique 13 permet de connecter les extrémités proximales des premier, deuxième et troisième brins 110, 11, 120. Cette liaison électrique 13 comporte un point de connexion unique 130 sur lequel vient se connecter ledit circuit 2 de filtrage. Un point de connexion unique 130 va ainsi permettre de communiquer en utilisant sélectivement les premier et deuxième circuits d'antenne 11 et 12.

L'architecture à deux brins en parallèle du premier circuit d'antenne 11 permet d'élargir la bande de fréquence (100MHz), nécessaire par exemple pour communiquer sur un réseau de communication de type Bluetooth (2.4 GHz).

Pour le deuxième circuit d'antenne 12 (par exemple dédiée à un circuit de localisation par satellite), l'antenne est alimentée sur un noeud de courant et sa longueur est repliée, permettant d'améliorer l'adaptation d'impédance.

Le point de connexion unique 130 pour les deux circuits d'antenne 11, 12 en parallèle permet de faciliter l'intégration mécanique du dispositif d'antenne dans le volume d'accueil de la pièce d'horlogerie 4 ainsi qu'une indépendance de conception entre la partie antenne et la partie électronique. En effet il suffit de régler l'intégration mécanique de la plaque support de ces circuits d'antenne dans la construction, le motif des circuits d'antenne étant réalisés par la suite par un procédé standard de gravure ne remettant pas en cause ladite intégration mécanique. Le deuxième circuit d'antenne 12 à deux brins reliés en série permet de communiquer sur une bande de fréquence plus étroite, par exemple à 1.5GHz employée pour communiquer sur un réseau de localisation par satellite (GPS par exemple).

Dans cette configuration, chaque circuit d'antenne 11, 12 s'étend essentiellement selon une trajectoire en arc de cercle en comportant deux brins 110, 111, 120, 121 agencés en parallèle sur le substrat 10 qui suivent cette trajectoire.

A titre d'exemple, chaque circuit d'antenne 11, 12 peut être réalisé sur une plage angulaire comprise entre 70 et 80° relatif à l'angle du secteur angulaire qui définit l'arc de cercle formé par ce circuit d'antenne 11, 12 et ce, de part et d'autre de la liaison de jonction centrale. Leur trajectoire peut suivre cet arc de cercle réalisé suivant un rayon compris entre 16 et 22mm. Les deux brins 110, 111, 120, 121 peuvent être écartés l'un de l'autre d'une distance comprise entre 1 et 2 mm.

Le substrat 10 se présente sous la forme d'une première plaque présentant un profil réalisé en arc de cercle, avantageusement en demi-cercle. Cette configuration aide grandement pour obtenir une polarisation circulaire pour les antennes satellites notamment. Cette configuration aide également pour la mise en oeuvre du protocole Bluetooth, du fait de la propagation des ondes dans des endroits clos comme les pièces d'habitation. Les deux circuits d'antenne sont imprimés sur une même face de la plaque, sa face supérieure, et s'étendent chacun de part et d'autre d'une partie de séparation portant la liaison électrique 13 joignant les deux circuits d'antenne 11, 12. Cette partie de séparation est avantageusement médiane, séparant le substrat en deux arcs de cercle de dimensions sensiblement égales voire égales ou strictement égales.

Le dispositif d'antenne comporte en outre une partie de connexion 100, se présentant sous la forme d'une excroissance de la plaque.

Lors de l'intégration du substrat 10 dans la carrure 40 de la pièce d'horlogerie 4, la partie de connexion 100 du substrat 10 est destinée à être pliée par rapport à la première plaque, autour d'un axe perpendiculaire à l'axe (X) et parallèle au plan (P).

Cette partie de connexion 100 comporte une ou plusieurs connexions conductrices permettant de relier les circuits d'antenne 11, 12 (au niveau de la liaison électrique 13) à un circuit électronique de contrôle 2 portant le circuit 20 de filtrage de type duplexeur/réjecteur. La partie de connexion 100 comporte un blindage électromagnétique de ces connexions conductrices pour éviter tout rayonnement vers l'extérieur et permettre d'éviter que la partie de connexion 100 n'influe sur l'impédance des circuits d'antenne 11 et 12. A titre d'exemple, le blindage peut être réalisé par un assemblage de plusieurs couches superposées : une couche inférieure de blindage, une couche d'isolant, une couche intégrant les connexions conductrices, puis une nouvelle couche d'isolant et une nouvelle couche supérieure de blindage.

Une carte de contrôle portant le circuit électronique de contrôle 2 (le circuit de contrôle 2 portant par exemple un ou des circuits RF émetteurs/récepteurs et de conception connue en soi) peut être agencée dans le fond du boîtier de la pièce d'horlogerie 4.

Le dispositif d'antenne 1 est connecté à la carte de contrôle, par la partie de connexion 100 via la ou les connexions conductrices.

En référence à la figure 2, dans son volume d'accueil, la pièce d'horlogerie 4 peut intégrer un cadran 43, avantageusement réalisé en métal, située au-dessus de la paroi de fond. Ce cadran peut porter des indications esthétiques visibles à travers la vitre de la pièce d'horlogerie. Il présente avantageusement une forme de disque.

La pièce d'horlogerie peut intégrer une cale 44 agencée sur le cadran. Cette cale 44 définit un plan d'appui horizontal et est destinée à supporter le substrat 10 porteur des circuits d'antenne. Cette cale peut présenter une forme circulaire ou demi-circulaire et définit une épaisseur constante déterminée au-dessus du cadran.

Le substrat 10 du dispositif d'antenne 1 est agencé pour se positionner sur la cale 44, sa première plaque en appui contre le plan d'appui formé par la cale. Sa partie de connexion 100 est pliée pour se positionner à la verticale, suivant un plan transversal au plan (P) moyen.

Un premier élément de calage 45 par exemple en mousse isolante peut être positionné entre le substrat et la lunette surmontant la carrure.

Un deuxième élément 46, par exemple en plastique isolant, par exemple de forme semi-annulaire, comporte une partie haute venant en appui contre la face supérieure du substrat 10, une partie verticale s'étendant vers le bas, jusqu'au cadran et une partie basse en appui contre le cadran.

Un écran tactile 47, par exemple de type capacitif, peut être fixé sous la vitre 42, sur une majeure partie de la surface de la vitre, séparée dudit deuxième élément 46 par de l'air.

Pour fixer le bracelet, la pièce d'horlogerie comporte de part et d'autre de sa carrure, deux cornes 48 agencées chacune pour fixer un brin distinct du bracelet.

Le dispositif d'antenne est multi-bandes pour faire fonctionner au moins deux circuits de communication, qui présentent des caractéristiques différentes en termes de fréquences, polarisation, gain et impédance.

Pour l'impédance le circuit électronique de contrôle 2 peut comporter un filtre duplexeur/réjecteur radiofréquence 20.

Pour le gain et la polarisation, c'est le motif de chaque circuit antenne 11, 12 qui permet de gérer ces paramètres.

L'emploi d'un filtre duplexeur/réjecteur permet d'isoler les deux circuits de communication (Bluetooth et GPS par exemple).

A titre d'exemple, il faut noter qu'un circuit de communication de type Bluetooth nécessite une polarisation linéaire alors qu'un circuit de communication de type GPS nécessite une polarisation circulaire. Le système GPS impose notamment une polarisation dite gauche.

Par ailleurs, la solution de l'invention permet de tenir compte du fait que la pièce d'horlogerie 4 comporte une carrure 40 réalisée en matériau métallique.

Selon un aspect particulier de l'invention, le dispositif d'antenne 1 est destiné à être placé le plus haut possible dans le boîtier de la pièce d'horlogerie, c'est-à-dire le plus près possible de la vitre, tout en restant masquée aux yeux de l'utilisateur.

Par ailleurs, l'agencement du dispositif d'antenne 1 dans le boîtier de la pièce d'horlogerie, permet de bénéficier de la carrure 40 en métal de la pièce d'horlogerie, par laquelle le dispositif d'antenne 1 peut émettre son rayonnement. La lunette 41, pouvant être réalisée dans un matériau de type céramique, permet, pour ne pas détériorer le rayonnement, en particulier en latéral, par l'ajout d'un matériau à fort diélectrique, d'agrandir la longueur électrique de l'antenne et ainsi en améliorer le rendement par rapport à sa taille physique.

Le dispositif d'antenne 1 étant placé au-dessus du cadran 43 qui est également métallique, on bénéficie d'un volume majoritairement rempli d'air (améliorant ainsi le rendement de l'antenne), au-dessus du dispositif d'antenne. Ce cadran 43 métallique fait office également d'écran, rendant en parti transparente toute modification sur la construction en dessous de ce cadran vis-à-vis du dispositif d'antenne 1.

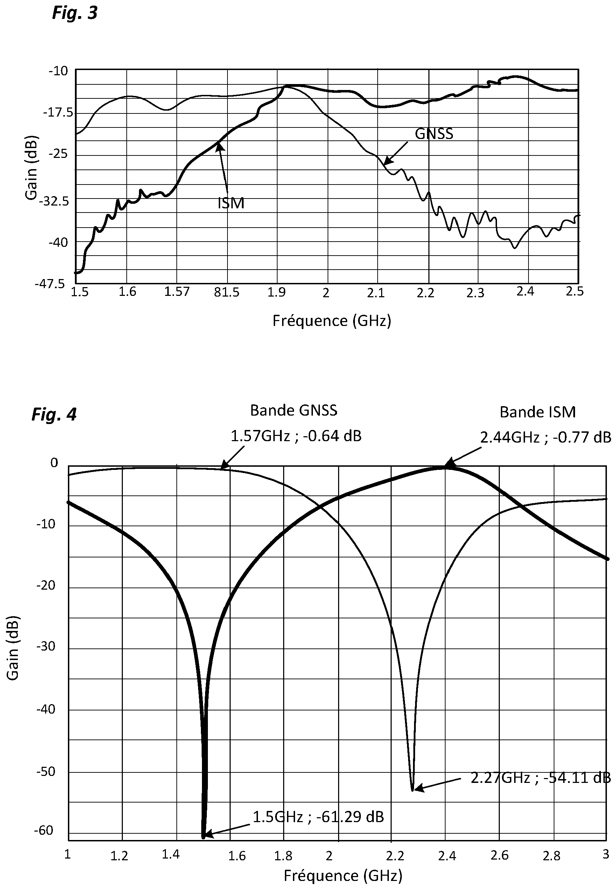

La figure 3 illustre la performance en termes de gain, vu par chacune des bandes de fréquence, la bande ISM (Industriel, Scientifique et Médical - correspondant à la bande de fréquence utilisée par un réseau tel que Bluetooth) et la bande de fréquence GNSS (Géolocalisation et Navigation par un Système de Satellites), en utilisation du système de communication de l'invention.

La figure 4 représente deux courbes illustrant la séparation des bandes de fréquence permise par l'utilisation du dispositif d'antenne conforme à l'invention. On peut voir que la bande ISM est bien isolée de la bande de fréquence GNSS.

## Revendications

1. Dispositif d'antenne (1) destiné à être employé dans un système de communication d'une pièce d'horlogerie, ledit dispositif étant **caractérisé en ce qu'**il comporte :
- un substrat (10) sous la forme d'une première plaque présentant un profil réalisé en arc de cercle ;
- un premier circuit d'antenne (11) réalisé sur ledit substrat et présentant des premier et deuxième brins (110, 111) présentant une extrémité proximale et une extrémité distale, et s'étendant en parallèle entre leurs extrémités proximales et distales, les premier et deuxième brins étant connectés par leurs extrémités proximales et séparés au niveau de leurs extrémités distales ;
- un deuxième circuit d'antenne (12) réalisé sur ledit substrat (10) et présentant des troisième et quatrième brins (120, 121) présentant une extrémité proximale et une extrémité distale, et s'étendant en parallèle entre leurs extrémités proximales et distales, les troisième et quatrième brins étant connectés par leurs extrémités distales et séparés au niveau de leurs extrémités proximales ;
- une liaison électrique de jonction (13) joignant les extrémités proximales des premier et troisième brins ;
- une partie de connexion (100) configurée pour être pliée par rapport à la première plaque, autour d'un axe perpendiculaire à l'axe (X) et parallèle au plan (P), et comportant une connexion conductrice connectée à la liaison électrique de jonction (13) et comportant un blindage électromagnétique de ladite connexion conductrice.

2. Dispositif selon la revendication 1, **caractérisé en ce que** lesdits brins (110, 111, 120, 121) sont recourbés.

3. Dispositif selon la revendication 1 ou 2, **caractérisé en ce que** le substrat (10) est un substrat en plastique flexible.

4. Dispositif selon l'une des revendications 1 à 3 **caractérisé en ce que** les premier et deuxième circuits d'antenne (11, 12) sont disposés de part et d'autre de ladite liaison électrique de jonction (13).

5. Système de communication à distance pour pièce d'horlogerie, comprenant :
- Un dispositif d'antenne (1) tel que défini dans l'une des revendications 1 à 4,
- Un circuit duplexeur/réjecteur (20) connecté à ladite liaison électrique de jonction par l'intermédiaire de la connexion conductrice de la partie de connexion (100).

6. Système de communication selon la revendication 5, **caractérisé en ce que** ledit circuit duplexeur/réjecteur (20) inclut un premier circuit de communication configuré pour communiquer selon un protocole de type Bluetooth et un deuxième circuit de communication configuré pour communiquer sur un réseau de localisation par satellite par l'intermédiaire des premier et deuxième circuits d'antenne respectivement.

7. Pièce d'horlogerie (4) comprenant un boîtier formé d'une carrure (40), d'une vitre supérieure (41) et d'une paroi de fond, **caractérisé en ce qu'**elle comporte un rehaut et un système de communication tel que défini dans l'une des revendications 5 ou 6 ledit substrat (10) étant disposé dans le rehaut de la pièce d'horlogerie.

8. Pièce d'horlogerie (4) selon la revendication 7, comprenant une vitre supérieure, lesdits premier et deuxième circuits d'antenne (11, 12) étant positionnés en vis-à-vis de sa vitre supérieure (41).

9. Pièce d'horlogerie (4) selon l'une des revendications 7 et 8, **caractérisé en ce qu'**elle comporte un cadran métallique (43) placé à l'intérieur de son boîtier, ledit dispositif d'antenne (1) étant positionné au-dessus du cadran métallique.

10. Pièce d'horlogerie (4) selon la revendication 9, **caractérisé en ce que** ledit circuit duplexeur/réjecteur (20) est positionné au-dessous du cadran métallique (43).

11. Pièce d'horlogerie (4) selon l'une quelconque des revendications 7 à 10 **caractérisé en ce qu'**elle est une montre connectée.

## Patentansprüche

1. Antennenvorrichtung (1), die dazu bestimmt ist, in einem Kommunikationssystem eines Uhrmachereistücks eingesetzt zu werden, wobei die Vorrichtung **dadurch gekennzeichnet ist, dass** sie beinhaltet:
- ein Substrat (10) in der Form einer ersten Platte, die ein Profil aufweist, das als Kreisbogen ausgeführt ist;
- eine erste Antennenschaltung (11), die auf dem Substrat ausgeführt ist, und erste und zweite Stränge (110, 111) aufweist, die ein proximales Ende und ein distales Ende aufweisen, und sich parallel zwischen ihren proximalen und distalen Enden erstrecken, wobei die ersten und zweiten Stränge an ihren proximalen Enden verbunden, und an ihren distalen Enden getrennt sind;
- eine zweite Antennenschaltung (12), die auf dem Substrat (10) ausgeführt ist und dritte und vierte Stränge (120, 121) aufweist, die ein proximales Ende und ein distales Ende aufweisen, und sich parallel zwischen ihren proximalen und distalen Enden erstrecken, wobei die dritten und vierten Stränge an ihren distalen Enden verbunden, und an ihren proximalen Enden getrennt sind;
- einen elektrischen Fügeanschluss (13), welche die proximalen Enden des ersten und des dritten Strangs verbindet;
- einen Verbindungsteil (100), der konfiguriert ist, um in Bezug auf die erste Platte um eine Achse senkrecht zur Achse (X) und parallel zur Ebene (P) gebogen zu werden, und der eine leitende Verbindung beinhaltet, die mit dem elektrischen Fügeanschluss (13) verbunden ist, und der eine elektromagnetische Abschirmung der leitenden Verbindung beinhaltet.

2. Vorrichtung nach Anspruch 1, **dadurch gekennzeichnet, dass** die Stränge (110, 111, 120, 121) gekrümmt sind.

3. Vorrichtung nach Anspruch 1 oder 2, **dadurch gekennzeichnet, dass** das Substrat (10) ein flexibles Kunststoffsubstrat ist.

4. Vorrichtung nach einem der Ansprüche 1 bis 3, **dadurch gekennzeichnet, dass** die erste und die zweite Antennenschaltung (11, 12) beiderseits des elektrischen Fügeanschlusses (13) angeordnet sind.

5. Fernkommunikationssystem für ein Uhrmachereistück, umfassend:
- eine Antennenvorrichtung (1) nach einem der Ansprüche 1 bis 4,
- eine Duplexer/Rejektor-Schaltung (20), die anhand der leitenden Verbindung des Verbindungsteils (100) mit dem elektrischen Fügeanschluss verbunden ist.

6. Kommunikationssystem nach Anspruch 5, **dadurch gekennzeichnet, dass** die Duplexer/Rejektor-Schaltung (20) eine erste Kommunikationsschaltung beinhaltet, die konfiguriert ist, um gemäß einem Protokoll in der Art von Bluetooth zu kommunizieren, und eine zweite Kommunikationsschaltung, die konfiguriert ist, um über ein Satellitenortungsnetzwerk jeweils anhand der ersten und zweiten Antennenschaltung zu kommunizieren.

7. Uhrmachereistück (4), das ein Gehäuse umfasst, das aus einem Mittelteil (40), einer oberen Scheibe (41) und einer Bodenwand gebildet ist, **dadurch gekennzeichnet, dass** es einen Höhenring und ein Kommunikationssystem nach einem der Ansprüche 5 oder 6 beinhaltet, wobei das Substrat (10) im Höhenring des Uhrmachereistücks angeordnet ist.

8. Uhrmachereistück (4) nach Anspruch 7, das eine oberen Scheibe umfasst, wobei die erste und zweite Antennenschaltung (11, 12) gegenüber seiner oberen Scheibe (41) positioniert sind.

9. Uhrmachereistück (4) nach einem der Ansprüche 7 und 8, **dadurch gekennzeichnet, dass** es ein metallisches Zifferblatt (43) beinhaltet, das im Inneren seines Gehäuses angeordnet ist, wobei die Antennenvorrichtung (1) über dem metallischen Zifferblatt positioniert ist.

10. Uhrmachereistück (4) nach Anspruch 9, **dadurch gekennzeichnet, dass** die Duplexer/Rejektor-Schaltung (20) unterhalb des metallischen Zifferblatts (43) positioniert ist.

11. Uhrmachereistück (4) nach einem der Ansprüche 7 bis 10, **dadurch gekennzeichnet, dass** es eine elektronische Multifunktions-Uhr ist.

## Claims

1. Antenna device (1) for use in a communication system of a timepiece, said device being **characterised in that** it includes:
- a substrate (10) in the form of a first plate with an arcuate profile;
- a first antenna circuit (11) formed on said substrate and having first and second strands (110, 111) with a proximal end and a distal end, and extending in parallel between their proximal and distal ends, the first and second strands being connected at their proximal ends and separated at their distal ends;
- a second antenna circuit (12) formed on said substrate (10) and having third and fourth strands (120, 121) with a proximal end and a distal end, and extending in parallel between their proximal and distal ends, the third and fourth strands being connected at their distal ends and separated at their proximal ends;
- an electrical junction link (13) joining the proximal ends of the first and third strands;
- a connection part (100) configured to be bent relative to the first plate, about an axis perpendicular to the axis (X) and parallel to the plane (P), and including a conductive connection connected to the electrical junction link (13) and including an electromagnetic shield for said conductive connection.

2. Device according to claim 1, **characterised in that** said strands (110, 111, 120, 121) are curved.

3. Device according to claim 1 or 2, **characterised in that** the substrate (10) is a flexible plastic substrate.

4. Device according to any one of claims 1 to 3, **characterised in that** the first and second antenna circuits (11, 12) are arranged on either side of said electrical junction link (13).

5. Remote communication system for a timepiece, comprising:
- an antenna device (1) as defined in any one of claims 1 to 4,
- a duplexer/rejector circuit (20) connected to said electrical junction link via the conductive connection of the connection part (100).

6. Communication system according to claim 5, **characterised in that** said duplexer/rejector circuit (20) includes a first communication circuit configured to communicate according to a Bluetooth-type protocol and a second communication circuit configured to communicate over a satellite location network via the first and second antenna circuits respectively.

7. Timepiece (4) comprising a case formed by a middle (40), an upper glass (41) and a back wall, **characterised in that** it includes a flange and a communication system as defined in any one of claims 5 or 6, said substrate (10) being disposed in the flange of the timepiece.

8. Timepiece (4) according to claim 7, comprising an upper glass, said first and second antenna circuits (11, 12) being positioned opposite its upper glass (41).

9. Timepiece (4) according to any one of claims 7 and 8, **characterised in that** it includes a metal dial (43) placed inside its case, said antenna device (1) being positioned above the metal dial.

10. Timepiece (4) according to claim 9, **characterised in that** said duplexer/rejector circuit (20) is positioned below the metal dial (43).

11. Timepiece (4) according to any one of claims 7 to 10, **characterised in that** it is a connected watch.
